# EUROPÄISCHE PATENTSCHRIFT

(11) **EP 0 381 274 B1**
(45) Veröffentlichungstag und Bekanntmachung des Hinweises auf die Patenterteilung: **20.01.1993**
(21) Anmeldenummer: 90200188.2
(22) Anmeldetag: 22.01.1990
(51) Int. Cl.: H02B 11/04

(54) **Verfahrbarer Kontaktbrückenträger für Niederspannungs-Leistungsschalter**
Mobile bridging contacts support for low-voltage power circuit breakers
Support mobile de contacts pontants pour disjoncteur de puissance à basse tension

(30) Priorität: 28.01.1989 DE 3902589
(43) Veröffentlichungstag der Anmeldung: 08.08.1990
(73) Patentinhaber: Licentia Patent-Verwaltungs-GmbH, 60596 Frankfurt (DE)
(72) Erfinder: Krafft, Henning, D-2350 Neumünster (DE); Grahlmann, Klaus, D-2350 Neumünster (DE)
(74) Vertreter: Vogl, Leo, Dipl.-Ing.

(56) Entgegenhaltungen:
- EP-A- 0 071 360
- US-A- 3 804 998

## Beschreibung

Die Erfindung betrifft einen verfahrbaren Kontaktbrückenträger für Niederspannungs-Leistungsschalter gemäß dem Oberbegriff des Anspruchs 1.

Verfahrbare Kontaktbrückenträger sind in der Ausführung bekannt, daß für jede Anschlußstelle die Kontaktbrücken einzeln in einen Käfig eingebaut sind, der in einer plattenförmigen Isolierwand aufgenommen wird, die innerhalb des Einschubes verfahrbar ist (DE-OS 15 90 231). Die einzelnen Käfige mit den Kontaktbrücken werden mit Befestigungsmitteln in der Isolierwand gehalten. Für einen sicheren Schalterbetrieb stellen sich hohe Anforderungen an die Stabilität der plattenförmigen Isolierwand.

Der Erfindung liegt die Aufgabe zugrunde, einen stabilen Kontaktbrückenträger für hohe mechanische Belastungen zu schaffen, der einen geringen Platzbedarf aufweist.

Diese Aufgabe wird erfindungsgemäß durch die im Kennzeichen des Anspruchs 1 angegebenen Merkmale gelöst.

Die Erfindung hat den Vorteil, daß die Streben des gitterförmigen Gestells eine hohe Stabilität gegenüber Biegekräften aufweisen und durch die Verwendung von relativ einfachen, zusammensteckbaren Bauelementen die Kosten für Herstellungswerkzeuge gering gehalten werden. Die formschlüssigen Steckverbindungen ermöglichen einen einfachen, schraubenlosen Zusammenbau des Gestells.

Vorteilhafte Weiterbildungen sind in den Unteransprüchen angegeben. Dazu gehören die einfache Verriegelung der Steckverbindungen und der einfache Einbau der Kontaktbrücken in das Gestell.

Anhand der Zeichnung wird ein Ausführungsbeispiel der Erfindung näher erläutert.

Fig. 1 zeigt einen Kontaktbrückenträger in Vorderansicht, bestückt mit einem Kontaktbrückenpaar.

Fig. 2 zeigt die Verbindungstechnik der waagerechten und senkrechten Streben des Kontaktbrückenträgers.

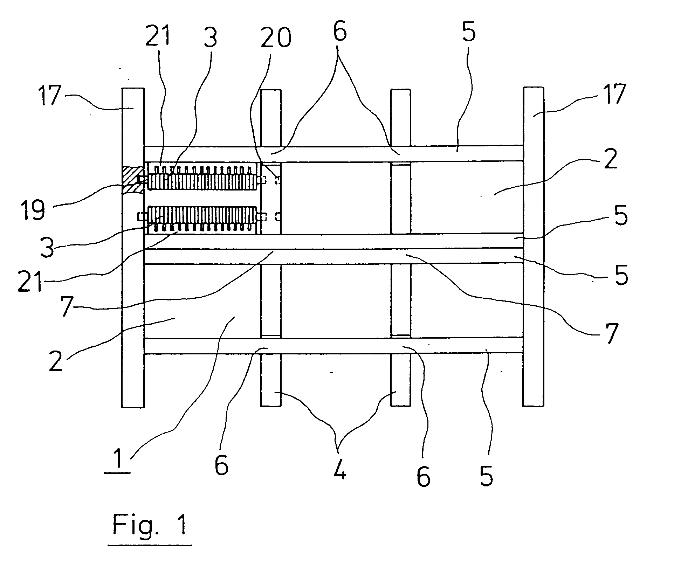

Im Ausführungsbeispiel gemäß Fig. 1 besteht der Kontaktbrückenträger aus einem gitterförmigen Gestell 1 mit insgesamt sechs Gitterfreiräumen zur Aufnahme von Kontaktbrücken 3. Das Gestell 1 ist aus zwei senkrecht angeordneten Streben 4, vier waagerecht angeordneten Streben 5 und zwei senkrecht angeordnete Randstreben 17 zusammengesetzt. Der zusammengesetzte und mit Kontaktbrükken bestückte Kontaktbrückenträger ist innerhalb des Einschubträgers verfahrbar, wobei die Bewegungsrichtung des Trägers lotrecht zu der in Fig 1 dargestellten Gitterfläche ausgeführt wird.

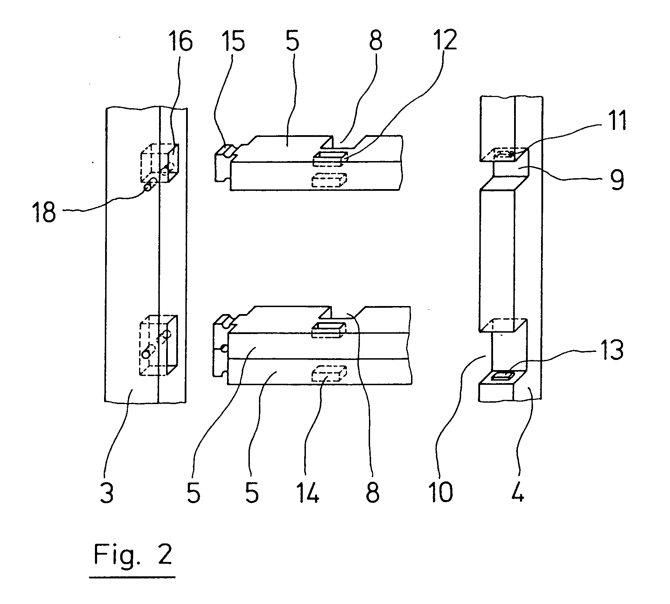

In Fig. 2 sind die Verbindungsstellen des Gestells 1 im Detail gezeigt. Die im Querschnitt rechteckförmigen Streben 4, 5 sind an ihren Verbindungsstellen 6, 7 mit Aussparungen 8, 9, 10 versehen, die bis zur Hälfte der Breitseite der Streben in die Streben hineindringen, so daß die Streben rechtwinklig ineinander gesteckt werden können. Die Ausnehmungen 9 der senkrecht angeordneten Streben 4 sind bis auf die in der Mitte angeordnete Ausnehmung 10 etwas breiter als die Schmalseite der waagerecht angeordneten Streben 5 breit ist. Hierdurch ist es möglich, daß durch eine senkrechte Verschiebung der waagerecht angeordneten Streben 5 Nocken 11, die sich in der Seitenfläche der Aussparungen 9 der senkrecht angeordneten Streben 4 befinden, in Löcher 12 der waagerecht angeordneten Streben 5 eingreifen und so die Streben ineinanderhalten. Verriegelt werden diese Nocken-Loch-Verbindungen 11, 12 durch Festlegung des senkrechten Abstandes der waagerechten Streben 5 in senkrecht dazu angeordneten Randstreben 17. Diese Festlegung der Abstände erfolgt über Zapfen 15 an den Enden der waagerechten Streben 5, die in Löcher 16 der Randstreben 17 gesteckt und mit einem Stift 18 gesichert werden. In der Mitte des Gestells 1 sind zwei waagerecht angeordnete Streben 5 unmittelbar nebeneinanderliegend eingesetzt. Die Aussparungen 10 in den senkrechten Streben 4 entsprechen in ihrer Breite genau der Breite der beiden Schmalseiten der Streben 5, so daß nach Einsetzen der ersten Strebe 5 und Einrasten der Nocken-Loch-Verbindungen 13, 14 für diese Verbindungsstellen 7 mit Einsetzen der zweiten Strebe 5 eine Verriegelung der Steckverbindungen an den Verbindungsstellen 7 vorliegt. Die Löcher 16 in den Randstreben 17 sind für die beiden zusammen eingesetzten Streben 5 so weit vergrößert, daß zwei Zapfen 15 aufgenommen werden können.

Die Erfindung ist nicht auf die hier beschriebene Anordnung der Streben und Ausführung der Verbindungstechnik beschränkt. Die Funktion der waagerechten und senkrechten Streben hinsichtlich der Verbindungstechnik ist vertauschbar und es sind, wenn nicht andere Gründen dafür vorliegen, keine Randstreben erforderlich, um die Nocken-Loch-Verbindung der Verbindungsstellen 6 der Einzelstreben zu verriegeln. Es sind weiterhin beliebige Verdopplungen von Streben denkbar.

Der Einbau der Kontaktbrücken 3 erfolgt gemäß Fig. 1 auf einfache Weise, indem beim Zusammensetzen des Gestells Achsen 19 der Kontaktbrücken 3 mit ihren Enden in entsprechend angeordnete Bohrungen 20 der senkrecht angeordneten Streben 4 und Randstreben 17 eingesetzt werden.

Der erforderliche Kontaktdruck auf die Lamellen der Kontaktbrükken 3 wird mittels Blattfedern 21 erzeugt, die oberhalb und unterhalb der Kontaktbrücken 3 an den waagerechten Streben 5 eines Gitterfreiraumes 2 befestigt sind. Die Blattferdern 21 sind als einstückiges Bauteil, mit einem durchgehenden Mittelteil und davon ausgehenden bügelartigen Federarmen, die auf die einzelnen Lamellen einwirken, ausgeführt. Abweichend von der vorangehend beschriebenen Einbauweise können die Kontaktbrücken 3 und Blattfedern 21 auch senkrecht in einem Gitterfreiraum 2 angeordnet sein, wenn der Leistungsschalter entsprechende angeordnete Kontakte aufweist.

Eine weitere Möglichkeit für den Einbau der Kontaktbrücken 3 in das Gestell 1 besteht darin, daß die einzelnen Kontaktbrücken in bekannter Weise in Käfigen eingebaut sind und daß diese vormontierte Baueinheiten in das Gestell 1 eingesetzt werden.

## Patentansprüche

1. Verfahrbarer Kontaktbrückenträger für Niederspannungs-Leistungsschalter in Einschubtechnik zur Aufnahme von Hauptstromkreis-Kontaktbrücken, dadurch gekennzeichnet, daß der Kontaktbrückenträger als gitterförmiges Gestell (1) ausgebildet ist, in dessen Gitterfreiräumen (2) die Kontaktbrücken (3) aufgenommen sind, daß das Gestell (1) aus einzelnen rechtwinklig zueinander angeordneten Streben (4, 5) besteht, die an ihren Verbindungsstellen (6, 7) mittels formschlüssigen Steckverbindungen zusammengehalten sind.

2. Verfahrbarer Kontaktbrückenträger nach Anspruch 1, dadurch gekennzeichnet, daß die Streben (4, 5) an ihren Verbindungsstellen (6, 7) Aussparungen (8, 9, 10) aufweisen, in denen die Streben (4,5) ineinandersteckbar sind, daß die Aussparungen (9) in den senkrecht angeordneten Streben (4) breiter sind als die Kantenlänge der waagerecht angeordneten Streben (5), daß mittels einer dadurch möglichen senkrechten Verschiebung der waagerechten Streben (5) Nocken (11), die innerhalb der Aussparungen (9) der senkrechten Streben (4) aus einer Seitenfläche dieser Aussparungen (9) herausragen, in Löcher (12) der waagerechten Streben (5) greifen und die ineinandergesteckten Streben (4, 5) lösbar mit-einander verbinden, daß zwei waagerechte Streben (5) des gitterförmigen Gestells (1) unmittelbar aneinandergrenzend angeordnet sind, daß an den Verbindungsstellen (7) dieser zweifach angeordneten waagerechten Streben (5) mit den senkrechten Streben (4) die Breite der Aussparungen (10) der Kantenlänge der zusammengesetzten waagerechten Streben (5) entspricht, daß für eine dieser beiden waagerechten Streben (5) an den Verbindungsstellen (7) Nocken-Loch-Verbindungen (13, 14) entsprechend den Nocken-Loch-Verbindungen (11, 12) an den Verbindungsstellen (6) der anderen Streben vorgesehen sind, so daß nach Einsetzen der einen waagerechten Strebe (5) in die Aussparungen (10), Herstellung der Nocken-Loch-Verbindungen (13, 14) und Einfügung der zweiten waagerechten Strebe (5) in die Aussparungen (10) eine verriegelte Steckverbindung an diesen Verbindungsstellen (7) vorliegt, daß die waagerechten Streben (5) an ihren Enden Zapfen (15) aufweisen, die in Löcher (16) von senkrecht angeordneten Randstreben (17) eingreifen und in diesen Löchern (16) mit Stiften (18) gehalten sind, so daß auch die Steckverbindungen der einzeln angeordneten waagerechten Streben (5) und senkrechten Streben (4) verriegelt sind.

3. Verfahrbarer Kontaktbrückenträger nach Anspruch 1 oder 2, dadurch gekennzeichnet, daß die Lamellen der Kontaktbrücken (3) auf Achsen (19) montiert sind und daß die Enden der Achsen (19) beim Zusammensetzen des Gestells (1) in Löcher (20) von gegenüberliegenden Streben (4, 5, 17) eines Gitterfreiraumes (2) eingesteckt sind.

4. Verfahrbarer Kontaktbrückenträger nach Anspruch 3, dadurch gekennzeichnet, daß Blattfedern (21) auf die Lamellen der Kontaktbrücken (3) einwirken und in dem Gitterfreiraum (2) zwischen den Kontaktbrücken (3) und parallel dazu verlaufenden Streben (4, 5, 17) angeordnet und an diesen Streben (4, 5, 17) befestigt sind.

5. Verfahrbarer Kontaktbrückenträger nach Anspruch 1 und 2, dadurch gekennzeichnet, daß jeweils zwei zusammenwirkende Kontaktbrücken (3) in einem Käfig eingesetzt und mit einem Käfig als komplette vormontierte Baueinheit in dem Gestell (1) aufgenommen sind.

## Claims

1. Movable contact bridge carrier for low voltage circuit breakers of plug-in type for the reception of main current contact bridges, characterised thereby that the contact bridge carrier is constructed as a grid-like frame (1), in the grid interstices (2) of which the contact bridges (3) are received, and that the frame (1) consists of individual bars (4, 5) which are arranged at right angles to one another and which are held together at their connecting points (6, 7) by means of shape-locking plug connections.

2. Movable contact bridge carrier according to claim 1, characterised thereby that the bars (4, 5) have, at their connecting points, recesses (8, 9, 10) in which the bars (4, 5) are pluggable into one another, that the recesses (9) in the vertically arranged bars (4) are wider than the edge length of the horizontally arranged bars (5), that by means of a vertical displacement, made possible thereby, of the horizontal bars (5) dogs (11), which project within the recesses (9) of the vertical bars (4) from a side surface of these recesses (9), engage in holes (12) of the horizontal bars (5) and releasably interconnect the bars (4, 5) plugged into one another, that two horizontal bars (5) of the grid-like frame (1) are arranged directly bordering one another, that at the connecting points (7) of these doubly arranged horizontal bars (5) with the vertical bars (4) the width of the recesses (10) corresponds to the edge length of the horizontal bars (5) placed together, that for one of these two horizontal bars (5) there are provided at the connecting points (7) dog-hole connections (13, 14) corresponding to the dog-hole connections (11, 12) at the connecting points (6) of the other bars, so that after insertion of the one horizontal bar (5) into the recesses (10), production of the dog-hole connections (13, 14) and introduction of the second horizontal bar (5) into the recesses (10) there is present a locking plug connection at these connecting points (7), and that the horizontal bars (5) have at their ends pins (15) which engage in holes (16) of vertically arranged edge bars (17) and are held in these holes (16) by spigots (18), so that the plug connections of the individually arranged horizontal bars (5) and vertical bars (4) are also locked.

3. Movable contact bridge carrier according to claim 1 or 2, characterised thereby that the laminations of the contact bridges are mounted on axles (19) and that the ends of the axles (19) are plugged into holes (20) of oppositely disposed bars (4, 5, 17) of a grid interstice (2) on assembly of the frame (20).

4. Movable contact bridge carrier according to claim 3, characterised thereby that leaf springs (21) act on the laminations of the contact bridges (3) and are arranged in the grid interstice (2) between the contact bridges (3) and bars (4) extending parallel thereto and are fastened to these bars (4, 5, 17).

5. Movable contact bridge carrier according to claim 1 and 2, characterised thereby that a respective pair of co-operating contact bridges (3) is inserted in a cage and received, together with a cage, as a complete preassembled constructional unit in the frame (1).

## Revendications

1. Support mobile de ponts de contacts pour interrupteur de puissance basse tension dans la technique du rack pour la réception de ponts de contacts de circuit de courant principal, caractérisé en ce que le support de ponts de contacts est conçu comme un bâti grillagé (1) , dont les espaces libres grillagés (2) reçoivent les ponts de contacts (3), en ce que le bâti (1) se composent de supports disposés à angle droit les uns par rapport aux autres (4, 5), qui sont maintenus entre eux à leurs points de jonctions (6, 7) au moyen de connexions à fiches blocables.

2. Support mobile de ponts de contacts selon la revendication 1, caractérisé en ce que des supports (4, 5) présentent des évidements (8, 9, 10) à leurs points de jonctions (6, 7), dans lesquels les supports (4, 5) sont enfichables les uns dans les autres, en ce que les évidements (9) dans les supports disposés verticalement (4) sont plus larges que la longueur d'arête des supports (5) disposés horizontalement, en ce qu'au moyen d'un déplacement vertical rendu possible des supports horizontaux (5), des cames (11), qui à l'intérieur des évidements (9) des supports verticaux (4) sortent d'une surface latérale de ces évidements (9), pénètrent dans des trous (12) des supports horizontaux (5) et connectent de façon amovible entre eux les supports enfichés entre eux (4, 5), en ce que deux supports horizontaux (5) du bâti grillagé (1) sont disposés en contact direct l'un touchant l'autre, en ce qu'aux points de jonction (7) entre les supports (5) à double disposition horizontale et les supports verticaux (4) la largeur des évidements (10) correspond à la longueur d'arête des supports horizontaux (5) assemblés, en ce que pour un des deux supports disposés horizontalement (5) aux points de jonctions (7) sont prévues des connexions trous-cames (13, 14) correspondant aux connexions trous-cames (11, 12) aux points de jonction (6) des autres supports, de sorte qu'après le montage d'un support horizontal (5) dans l'évidement (10), la réalisation des connexions trous-cames (13, 14) et l'introduction du deuxième support horizontal (5) dans les évidements (10) est établie une connexion à fiches verrouillée à ces points de jonction (7), en ce que les supports horizontaux (5) présentent à leurs extrémités des tourillons (15) qui pénètrent dans les trous 16 des supports de bordure (17) disposés verticalement et qui sont maintenus dans ces trous (16) par des chevilles (18), de façon que les connexions à fiches de chacun des supports disposés horizontalement (5) et des supports disposés verticalement (4) soient verrouillées.

3. Support mobile de ponts de contact selon la revendication 1 ou 2, caractérisé en ce que des lamelles des ponts de contacts (3) sont montées sur des axes (19) et en ce que les extrémités des axes (19) lors de l'assemblage du bâti (1) sont enfichées dans des trous (20) de supports opposés (4, 5, 17) d'un espace libre grillagé (2).

4. Support mobile de ponts de contact selon la revendication 3, caractérisé en ce que des ressorts à lames (21) agissent sur les lamelles des ponts de contacts (3) et sont disposés dans un espace libre grillagé (2) entre les ponts de contacts (3) et les supports courant parallèlement (4, 5, 17) et sont fixés à ces supports (4, 5, 17).

5. Support mobile de ponts de contact selon la revendication 1 ou 2, caractérisé en ce que deux ponts de contacts (3) agissant ensemble sont montés dans un logement et sont mis en place avec un logement dans le bâti (1) comme unité de construction complète prémontée.
